# EUROPEAN PATENT APPLICATION

(11) **EP 2 381 302 A1**
(43) Date of publication of application: **26.10.2011**
(21) Application number: 11150570.7
(22) Date of filing: 11.01.2011
(51) Int. Cl.: G02F 1/13357

(54) **Display apparatus**

(30) Priority: 21.04.2010 KR 20100036926
(71) Applicant: LG Electronics Inc., Seoul 150-721 (KR)
(72) Inventor: Choi, Moongoo, 137-724 Seoul (KR); Jeon, Seongman, 137-724 Seoul (KR); Lee, Hyunho, 137-724 Seoul (KR); Kim, Sangcheon, 137-724 Seoul (KR)
(74) Representative: Cabinet Plasseraud

(57) **Abstract**

Provided is a display apparatus (1), which includes a display panel (21) and a backlight unit (23). The backlight unit (23) is disposed behind the display panel (21) to provide light. The backlight unit (23) includes a first layer (231), a light source (24), and a second layer (233). The light source (24) is disposed on the first layer (231). The second layer (233) includes a receiving part (233b) surrounding the light source (24), and is disposed on an upper side of the first layer (231) to transmit and diffuse light emitted from the source (24). A space is disposed between the receiving part (233b) and the light source (24).

## Description

### CROSS-REFERENCE TO RELATED APPLICATIONS

The present application claims priority under 35 U.S.C. 119 and 35 U.S.C. 365 to Korean Patent Application No. 10-2010-0036926 (filed on 21 April, 2010), which is hereby incorporated by reference in its entirety.

### BACKGROUND

The present disclosure relates to a display apparatus.

Liquid crystal display apparatuses, which are small, lightweight, and economical in power consumption, are widely used in various fields such as notebook computers and monitors.

Such a liquid crystal display apparatus includes a liquid crystal panel and a backlight unit. The backlight unit provides light to the liquid crystal panel, and the light passes through the liquid crystal panel. At this point, the liquid crystal panel adjusts transmissivity of the light to form an image.

Such backlight units may be classified into an edge type backlight unit and a direct type backlight unit according to an arrangement of a light source. The edge type backlight unit includes a light source disposed a side of a liquid crystal panel, and a light guiding panel disposed on the rear surface of the liquid crystal panel, to guide light from the side of the liquid crystal panel to the rear surface of the liquid crystal panel. The direct type backlight unit includes a plurality of light sources on the rear surface of a liquid crystal panel to provide light directly to the rear surface from the light sources.

An electro luminescence (EL), a cold cathode fluorescent lamp (CCFL), a hot cathode fluorescent lamp (HCFL), and a light emitting diode (LED) may be used as a light source for the backlight units. Of these, the LED is low in power consumption, and is high in light emitting efficiency.

### SUMMARY

Embodiments provide a display apparatus that includes a slim display module and a light guiding layer formed of resin with a uniform thickness to increase an area of the light guiding layer attached to a display panel.

Embodiments also provide a display apparatus that can reduce a difference in brightness of light from light sources due to an uneven surface attachment characteristic occurring when applying resin on a light extraction layer and curing it.

Embodiments also provide a display apparatus that can minimize the bending moment of a plurality of layers constituting a backlight unit due to a difference in thermal expansion coefficients thereof.

Embodiments also provide a display apparatus including a light guiding layer, which can improve the yield of a light guiding layer manufacturing process and minimize color and brightness deviations of light emitted from light sources, thereby making the performance of a backlight unit and the brightness of light uniform.

In one embodiment, a display apparatus includes: a display panel; and a backlight unit disposed behind the display panel to provide light, wherein the backlight unit includes: a first layer; a light source on the first layer; and a second layer including a receiving part surrounding the light source, the second layer being disposed on an upper side of the first layer to transmit and diffuse light emitted from the source, wherein a space is disposed between the receiving part and the light source.

The details of one or more embodiments are set forth in the accompanying drawings and the description below. Other features will be apparent from the description and drawings, and from the claims.

### BRIEF DESCRIPTION OF THE DRAWINGS

FIG. 1 is an exploded perspective view illustrating a display apparatus according to an embodiment.

FIG. 2 is a cross-sectional view illustrating the display apparatus of FIG. 1.

FIGS. 3 and 4 are cross-sectional views illustrating configurations of display apparatuses according to embodiments, in which an adhesion layer is disposed between a display panel and a backlight unit in FIG. 3, and there is no adhesion layer between a display panel and a backlight unit in FIG. 4.

FIGS. 5 and 6 are cross-sectional views illustrating a detailed structure of a backlight unit constituting a display module according to an embodiment, in which FIG. 5 is a cross-sectional view illustrating a state where a backlight unit is coupled to a display module, and FIG. 6 is a cross-sectional view illustrating a process where a backlight unit is coupled to a display module.

FIGS. 7 to 10 are plan views illustrating arrangements of light sources of backlight units and structures of light extraction layers according to embodiments.

FIGS. 11 and 12 are cross-sectional views illustrating a coupling structure of a driving part of a display module according to an embodiment.

FIG. 13 is an exploded perspective view illustrating a configuration of a backlight unit according to a first embodiment.

FIG. 14 is a vertical cross-sectional view illustrating the backlight unit of FIG. 13.

FIG. 15 is a cross-sectional view illustrating a light guiding layer according to a second embodiment.

FIG. 16 is a cross-sectional view illustrating a light guiding layer according to a third embodiment.

FIG. 17 is a cross-sectional view illustrating a light guiding layer according to a fourth embodiment.

FIG. 18 is a cross-sectional view illustrating a light guiding layer according to a fifth embodiment.

FIG. 19 is a cross-sectional view illustrating a light guiding layer according to a sixth embodiment.

FIG. 20 is a cross-sectional view illustrating a light guiding layer according to a seventh embodiment.

FIG. 21 is an exploded perspective view illustrating a backlight unit including a light guiding layer according to an eighth embodiment.

FIG. 22 is a vertical cross-sectional view illustrating the backlight unit of FIG. 21.

FIG. 23 is a partial cut-away perspective view illustrating a light guiding layer according to a ninth embodiment.

FIG. 24 is a partial cut-away perspective view illustrating a light guiding layer according to a tenth embodiment.

### DETAILED DESCRIPTION OF THE EMBODIMENTS

Reference will now be made in detail to the embodiments of the present disclosure, examples of which are illustrated in the accompanying drawings.

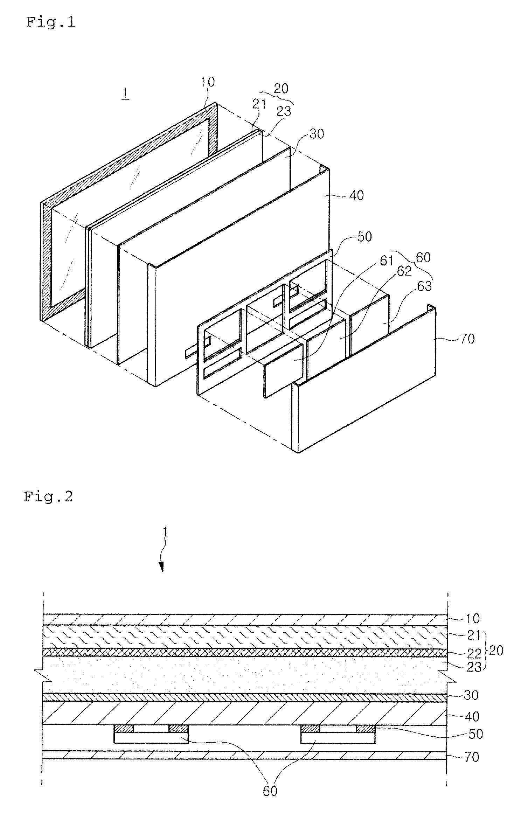

FIG. 1 is an exploded perspective view illustrating a display apparatus according to an embodiment. FIG. 2 is a cross-sectional view illustrating the display apparatus of FIG. 1.

Referring to FIGS. 1 and 2, a display apparatus 1 according to an embodiment includes: a front cover 10; a display module 20 disposed on the rear surface of the front cover 10; a heat dissipation member 30 disposed on the rear surface of the display module 20; a back cover 40 receiving the display module 20 and the heat dissipation member 30; a driving part 60 coupled to the rear surface of the back cover 40; a chassis 50 for fixing the driving part 60 to the back cover 40; and a driving part cover 70 for covering the driving part 60.

In detail, the display module 20 includes a display panel 21 for forming an image, and a backlight unit 23 for emitting light forward from the rear surface of the display panel 21. The driving part 60 disposed on the rear surface of the back cover 40 may include a power supply part 61, a main board 62, and a driving control part 63. The driving part 60 can be fixed to the rear surface of the back cover 40 through the chassis 50. The driving control part 63 may be a timing controller, which controls an operation timing of each driving circuit of the display panel 21. The main board 62 transmits V-sync, H-sync, and R/G/B resolution signals to the timing controller, and the power supply part 61 supplies power to the display panel 21 and the backlight unit 23. The driving part 60 is covered with the driving part cover 70, and thus, is separated from the outside.

In addition, the heat dissipation member 30 is disposed between the display module 20 and the back cover 40 to dissipate heat generated from the display module 20 and the driving part 60.

The front cover 10 may include an opening part having a predetermined size therein, and have a tetragonal strip shape with a predetermined width or a tetragonal plate shape covering the entire front surface of the display module 20. When the front cover 10 has the tetragonal strip shape, the front cover 10 covers a front edge of the display module 20 where an image is not output, and protects the front edge of the display module 20 from external force. When the front cover 10 has the tetragonal plate shape, the front cover 10 includes a transparent plate that transmits light, and the transparent plate may be a plastic panel that is formed of resin using an injection compression molding method, or the transparent plate may be formed of compressive reinforced glass. An opaque film layer or a coating layer may be disposed at the edge of the front cover 10 to cover the edge of the display module 20 where light is not emitted.

Hereinafter, a structure of the display module 20 and an installation structure of the driving part 60 will now be described with reference to the accompanying drawings.

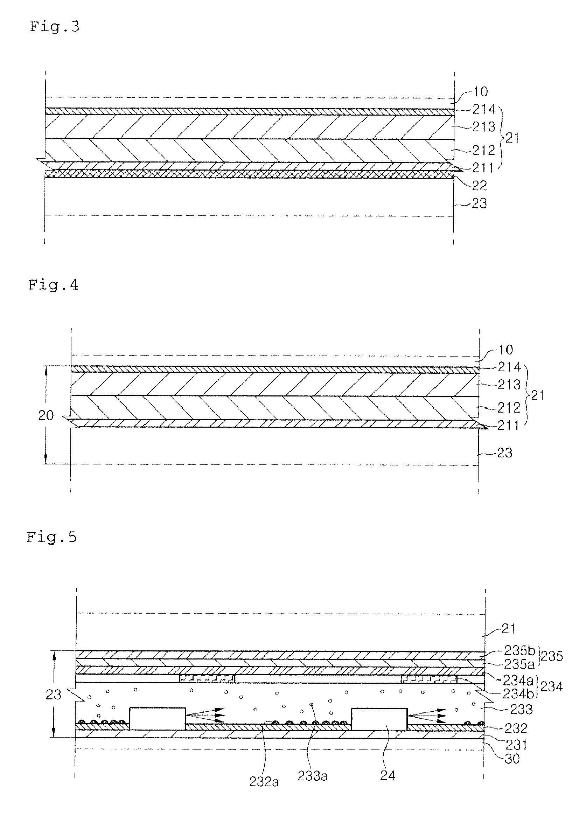

FIGS. 3 and 4 are cross-sectional views illustrating configurations of display apparatuses according to embodiments. In FIG. 3, an adhesion layer is disposed between a display panel and a backlight unit. In FIG. 4, there is no adhesion layer between a display panel and a backlight unit.

Referring to FIGS. 3 and 4, the front cover 10 is disposed at the front-most side (the uppermost side in FIGS. 3 and 4); and the display module 20, the heat dissipation member 30, and the back cover 40 are coupled to the front cover 10 at the rear side thereof. The driving part 60 is installed on the rear surface of the back cover 40 through the chassis 50. The driving part 60 is covered with the driving part cover 70.

The display module 20 may include the display panel 21 and the backlight unit 23, and an adhesive layer 22 formed of transparent adhesive may be disposed between the display panel 21 and the backlight unit 23.

In detail, referring to FIG. 3, the display panel 21 may be placed on the upper surface of the backlight unit 23, and the adhesive layer 22 may be disposed between the display panel 21 and the backlight unit 23.

Alternatively, referring to FIG. 4, the display panel 21 may be placed on the upper surface of the backlight unit 23 without an adhesive layer.

Hereinafter, a structure having no adhesion layer between the display panel 21 and the backlight unit 23 will be exemplified. However, the sprit of the present disclosure can be applied to both the embodiments of FIGS. 3 and 4.

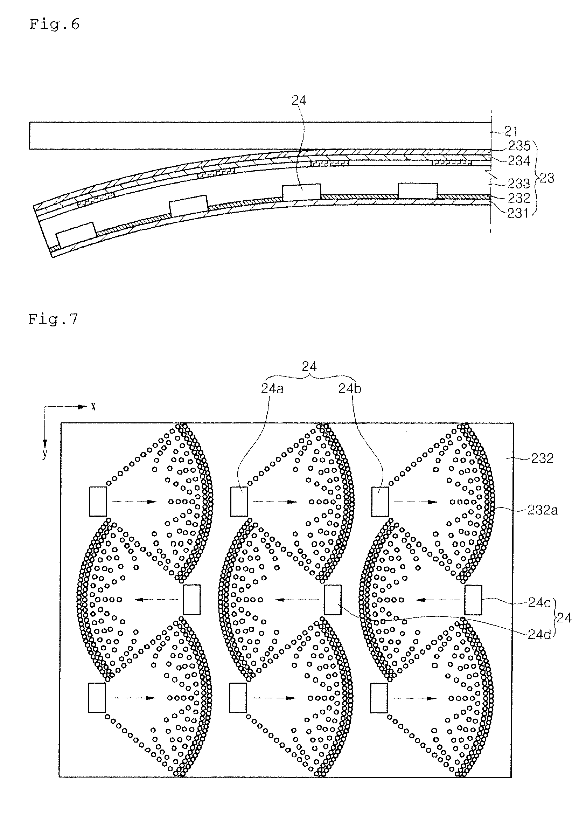

FIGS. 5 and 6 are cross-sectional views illustrating a detailed structure of a backlight unit constituting a display module according to an embodiment. FIG. 5 is a cross-sectional view illustrating a state where a backlight unit is coupled to a display module. FIG. 6 is a cross-sectional view illustrating a process where a backlight unit is coupled to a display module.

Referring to FIG. 4, the front cover 10 is disposed on the front surface of the display panel 21, and the backlight unit 23 is disposed on the rear surface thereof.

In detail, polarizing plates 211 and 214 are placed on the front and rear surfaces (the upper and lower surfaces in the drawing) of the display panel 21 that forms an image, and a first substrate 212 and a second substrate 213 are disposed between the polarizing plates 211 and 214. The first substrate 212 is also called a thin film transistor (TFT) array substrate. A plurality of scan lines may cross a plurality of data lines in a matrix shape in the first substrate 212 to define a plurality of pixels. Each pixel may be provided with a TFT that can turn a signal on or off, and provided with a pixel electrode connected to the TFT. The second substrate 213 is also called a color filter substrate. The second substrate 213 may be provided with color filters of red (R), green (G), and blue (B) corresponding to pixels, and provided with a black matrix surrounding them to hide the scan lines, the data lines, and non-display devices such as the TFTs. A gate driving part and a data driving part may be disposed at the edge of the display panel 21 to generate a driving signal for driving the display panel 21.

The backlight unit 23 is disposed on the rear surface (the lower side in the drawing) of the display panel 21.

In detail, the backlight unit 23 includes, from the lowest layer in the drawing, a circuit board layer 231 including a printing circuit board (PCB); a plurality of light sources 24 mounted on the circuit board layer 231; a light extraction layer 232 disposed on the upper surface of the circuit board layer 231; a light guiding layer 233 disposed on the upper side of the light extraction layer 232 and surrounding the light sources 24; a screening layer 234 disposed on the upper side of the light guiding layer 233; and a diffusion layer 235 disposed on the upper side of the screening layer 234. The display panel 21 is placed on the upper side of the diffusion layer 235. As described above, the display panel 21 may be just placed on the diffusion layer 235, or be attached to the diffusion layer 235 by the adhesive layer 22.

The circuit board layer 231 and the light extraction layer 232 may be defined as a first layer, and the light guiding layer 233 may be defined as a second layer. The layers constituting the backlight unit 23 may be formed of flexible materials. A backlight unit according to an embodiment may be a flexible backlight unit that includes flexible layers having predetermined bending degrees.

Referring to FIG. 6, since the backlight unit 23 coupled to the rear surface of the display panel 21 is bendable, the backlight unit 23 can be also applied to a flexible display panel.

In detail, rollable display devices and electronic papers, which are recently commercialized, include an organic light emitting diode (OLED) without using a backlight unit, but a display panel using a TFT-LCD method and having no self-illuminating device requires a separate light source. To support a display panel using a TFT-LCD method, research has been carried out on a flexible backlight unit. Accordingly, a flexible backlight unit according to an embodiment makes it possible to bend a display panel using a TFT-LCD.

The circuit board layer 231 may be a board on which the light sources 24 are mounted, and be provided with an electrode pattern for connecting the light sources 24 to an adaptor for supplying power. For example, the upper surface of the board may be provided with a carbon nanotube electrode pattern for connecting the light sources 24 to the adaptor. The circuit board layer 231 may be a PCB formed of polyethylene terephthlate (PET), glass, polycarbonate (PC), or silicon (Si) on which the light sources 24 are mounted, or be a film-type flexible PCB.

The light source 24 may be one of an LED chip and an LED package including at least one LED chip. In the current embodiment, an LED package is exemplified as the light source 24.

The LED packages constituting the light sources 24 may be classified into a top view LED package and a side view LED package according to the direction of a light emitting surface. The light source 24 may include at least one of a top view LED package having a light emitting surface at the upper side and a side view LED package having a light emitting surface at a lateral side.

When the light sources 24 are side view LED packages, each of the light sources 24 has a light emitting surface at a lateral side, and can emit light in a lateral direction, that is, in a direction parallel to the circuit board layer 231. Thus, the thickness of the light guiding layer 233 surrounding the light sources 24 can be decreased to slim the backlight unit 23, further, the display apparatus 1.

The light source 24 may also be a color LED emitting at least one of red, blue, and green light, or a white LED. The color LED may include at least one of a red LED, a blue LED, and a green LED, and the arrangement and light type of the LED may be varied within the scope of the present disclosure.

The light guiding layer 233 surrounding the light sources 24 transmits and diffuses light emitted from the light sources 24 to uniformly provide the light to the display panel 21.

The light extraction layer 232 may be disposed on the circuit board layer 231, and be formed in the region except for regions provided with the light sources 24. The light extraction layer 232 reflects light emitted from the light sources 24, and also reflects again light totally reflected from a boundary of the light guiding layer 233, so as to more widely diffuse the light. The light extraction layer 232 may include at least one of a metal or a metal oxide as reflective materials, and be a reflection or mirror sheet including a metal or a metal oxide having high reflectivity such as aluminum (Al), silver (Ag), gold (Au), or titanium dioxide (TiO₂). In this case, the light extraction layer 232 may be formed by forming the metal or metal oxide through depositing or coating on the circuit board layer 231, or be formed by printing metal ink thereon. In this case, the metal or metal oxide may be deposited using a thermal evaporation method, a physical vapor deposition (PVD) method including a sputtering method and an evaporation method, or a vacuum evaporation method. In addition, coating and printing methods include a printing method, a gravure coating method, or a silk screen method.

The light extraction layer 232 may have a plurality of holes at positions corresponding to the light sources 24, so that the light sources 24 can pass through the holes and be surrounded by the light guiding layer 233. As such, since the light sources 24 are inserted in the holes of the light extraction layer 232 to constitute the backlight unit 23, the light extraction layer 232 and the circuit board layer 231 provided with the light sources 24 can be more securely fixed to each other.

A plurality of diffusion patterns 232a may be disposed on the upper surface of the light extraction layer 232 such that light travels with uniform brightness between the light sources 24. The distribution density of the diffusion patterns 232a may increase in a travelling direction of light between adjacent ones of the light sources 24. Thus, a brightness decrease of light in a direction going away from a corresponding light source can be compensated for, and thus, the brightness of light emitted from the backlight unit 23 can be uniformly maintained. The diffusion patterns 232a may have a hemi-sphere dot shape, a cone dot shape, or a polygonal cone dot shape, but the present disclosure is not limited thereto.

In detail, the diffusion patterns 232a may have a cone structure or polygonal cone structure to which a material having high reflectivity is applied. In this case, even when the backlight unit 23 attached to the display panel 21 is bent, light incident from the light sources 24 can be reflected and diffused, and thus, can travel to the display panel 21.

When the diffusion patterns 232a have a triangle cross-section, the triangle cross-section may have an angle ranging from about 20° to about 80°, and a material having high reflectivity, low transmissivity, and low absorbance may be formed through coating or depositing on the outer surfaces of the diffusion patterns 232a.

The diffusion patterns 232a may be manufactured in an integral sheet form, in which circular or polygonal cone shaped polymers are formed on a thin sheet. The outer surfaces of the diffusion patterns 232a, that is, the reflection surfaces thereof may be formed of a metal.

In detail, a process of forming the diffusion patterns 232a on the light extraction layer 232 will now be described.

First, plastic resin is injected in a mold having circular or polygonal cone shaped recesses through a UV molding or thermal molding injection process. A sheet manufactured through the UV molding or thermal molding injection process is disposed on the circuit board layer 231. At this point, the sheet may be coupled to the circuit board layer 231 using a lamination method or an adhesion method. A reflection surface (or a reflection film) may be formed through a vapor deposition process including a sputter deposition, or a printing process on a surface of the sheet provided with the diffusion patterns 232a.

The mold may be manufactured by forming a master mold using a machining method or a photo process, and performing a plating process. A process of manufacturing the master mold may include a process of two-dimensionally arraying subminiature lenses on a surface of a transparent substrate, a process of applying a negative photo-sensitive film on an opposite surface of the transparent substrate to the lenses, a process of emitting parallel light to the lenses in a direction perpendicular to surfaces of the lenses, a process of transmitting light through each lens and forming a focus within the negative photo-sensitive film to form a circular cone shape, a process of treating the negative photo-sensitive film with a development solution, and a process of removing the lenses.

The diffusion patterns 232a (dots) may be arrayed in a fan or triangle shape (refer to FIG. 7), which is widen in a travelling direction of light emitted from a corresponding one of the light sources 24.

The diffusion patterns 232a may include at least one of a metal or a metal oxide as a reflective material, for example, may include a metal or a metal oxide having high reflectivity such as aluminum (Al), silver (Ag), gold (Au), or titanium dioxide (TiO₂). In this case, the diffusion patterns 232a may be formed by forming the metal or metal oxide through depositing or coating on the circuit board layer 231, or be formed by printing metal ink thereon. In this case, in a same manner as that for the light extraction layer 232, the metal or metal oxide may be deposited using a thermal evaporation method, a physical vapor deposition (PVD) method including a sputtering method and an evaporation method, or a vacuum evaporation method. In addition, coating and printing methods include a printing method, a gravure coating method, or a silk screen method.

The light guiding layer 233 placed on the first layer including the circuit board layer 231 and the light extraction layer 232 may be formed of a light-transmitting material, for example, silicone or acrylic based resin such as polymethyl metaacrylate (PMMA). However, the material of the light guiding layer 233 is not limited thereto, and thus, may be formed of one of various resins.

The light guiding layer 233 may be formed of resin having a refractive index ranging from about 1.4 to about 1.6 such that light emitted from the light sources 24 is diffused to ensure the uniform brightness of the backlight unit 23. For example, the light guiding layer 233 may be formed of any one selected from the group consisting of polyethyeleneterepthalate (PET), polycarbonate (PC), polypropylene (PP), polyethylene (PE), polystyrene (PS), polyepoxy (PE), silicone, and acrylic.

The light guiding layer 233 may include adhesive polymer resin, so that the light guiding layer 233 can securely adhered to the light sources 24 and the light extraction layer 232. For example, the light guiding layer 233 may include unsaturated polyester, an acrylic-based material such as methylmethacrylate, ethylmethacrylate, isobutyl methacrylate, normalbutyl methacrylate, normalbutyl methylmethacrylate, acrylic acid, methacrylic acid, hydroxyl ethylmethacrylate, hydroxyl propyl methacrylate, hydroxyl ethyl acrylate, acryl amide, methylol acryl amide, glycidyl methacrylate, ethyl acrylate, isobutyl acrylate, normalbutyl acrylate, and 2-ethyl hexyl acrylate polymer, copolymer, or therpolymer, an urethane-based material, an epoxy-based material, and a melamine-based material.

The light guiding layer 233 may be formed by applying liquid or gel resin on the circuit board layer 231 provided with the light sources 24 and the light extraction layer 232, and by curing the resin. Alternatively, the light guiding layer 233 may be formed by applying resin on a support sheet, by partially curing the resin, and by adhering the resin to the circuit board layer 231. That is, the light guiding layer 233 may be separately manufactured as an independent member to be adhered to the circuit board layer 231.

The light guiding layer 233 may include a plurality of dispersion particles 233a therein. In detail, the dispersion particles 233a disperse and refract light emitted from the light sources 24, so that the light can be diffused more widely.

In detail, to disperse and reflect light emitted from the light sources 24, the dispersion particles 233a may be formed of a material having a refractive index different from that of the material constituting the light guiding layer 233, more particularly, be formed of a material having a refractive index greater than that of silicone-based or acrylic-based resin constituting the light guiding layer 233.

For example, the dispersion particles 233a may include poly methyl methacrylate/styrene copolymer (MS), polymethyl metaacrylate (PMMA), poly styrene (PS), silicone, titanium dioxide (TiO₂) silicon dioxide (SiO₂) or a combination thereof.

The dispersion particles 233a may be formed of a material having a refractive index lower than that of the material constituting the light guiding layer 233. For example, the dispersion particles 233a may be constituted by bubbles within the light guiding layer 233. However, the material constituting the dispersion particles 233a is not limited thereto, and thus, may include one of various polymers or inorganic particles.

The diffusion layer 235 may be disposed on the light guiding layer 233 such that light emitted from the light sources 24 is diffused upward.

In detail, the diffusion layer 235 is just placed on the light guiding layer 233, or be coupled thereto by adhesive. The diffusion layer 235 may be disposed in the form of an optical sheet on the upper surface of the light guiding layer 233. For example, the optical sheet may be formed by stacking one or more diffusion sheets 235a and one or more prism sheets 235b. A plurality of sheets constituting the diffusion layer 235, that is, a plurality of sheets constituting the optical sheet are adhered to or in close contact with one another without a space therebetween, thereby slimming the backlight unit 23. The diffusion layer 235 may be formed by coupling the prism sheets 235b with the diffusion sheets 235a, or be constituted only by at least one of the diffusion sheets 235a, or be constituted only by at least one of the prism sheets 235b. The diffusion layer 235 may further include various other function layers than the diffusion sheets 235a and the prism sheets 235b. The diffusion sheet 235a diffuses light emitted from the light guiding layer 233 to prevent the light from being partially concentrated, thereby ensuring the uniform brightness of the light. The prism sheet 235b collects light emitted from the diffusion sheet 235a to emit the light in a direction perpendicular to the display panel 21.

The light guiding layer 233 may be connected to the diffusion layer 235 with a predetermined space therebetween. As the space between the diffusion layer 235 and the light guiding layer 233 increases, the diffusion effect of light is improved. Furthermore, as the diffusion effect of light is improved, the brightness of light emitted from the backlight unit 23 can be uniform. However, the space between the diffusion layer 235 and the light guiding layer 233 is optimally determined with respect to the slimming of the display apparatus 1.

To space the light guiding layer 233 away from the diffusion layer 235, a spacer may be disposed between the light guiding layer 233 and the diffusion layer 235. Alternatively, a protrusion that functions as the spacer protrudes from the front surface (the upper surface in the drawing) of the light guiding layer 233. That is, when a recess is formed in a mold for separately injection-molding the light guiding layer 233, the protrusion may be formed on the front surface of the light guiding layer 233 while injecting the light guiding layer 233.

The screening layer 234 may be disposed between the light guiding layer 233 and the diffusion layer 235, and may include a plurality of screening patterns 234b.

The screening pattern 234b may be a partial reflection pattern that transmits at lease one portion of light emitted from the light source 24 and reflects the rest thereof. Alternatively, the screening layer 234 may be a pattern layer formed by printing the screening patterns 234b on a transparent film 234a. The screening patterns 234b may be the same in shape and material as the diffusion patterns 232a disposed on the light extraction layer 232. When the backlight unit 23 is manufactured, the screening layer 234 is turned upside down and is placed on the light guiding layer 233. That is, the screening patterns 234b contact the light guiding layer 233.

The screening layer 234 may be disposed on the lower surface of the diffusion layer 235 as well as the upper surface of the light guiding layer 233. The screening patterns 234b may be disposed within the light guiding layer 233. In other words, the screening patterns 234b may be disposed at a position spaced apart downward from the upper surface of the light guiding layer 233.

Since the screening patterns 234b are disposed in the regions corresponding to the positions of the light sources 24, light emitted upward from the light sources 24 can be reflected and diffused by the screening patterns 234b. As a result, the possibility that hot spots are perceived in regions of the display panel 21 corresponding to the positions of the light sources 24 can be reduced. Furthermore, the brightness of light emitted from the backlight unit 23 can be uniform.

FIGS. 7 to 10 are plan views illustrating arrangements of light sources of backlight units and structures of light extraction layers according to embodiments.

Referring to FIG. 7, the diffusion patterns 232a improve travelling efficiency of light emitted from one of light sources 24a to adjacent one thereof. The diffusion patterns 232a diffuse or refract light emitted from the light sources 24 to direct the light to the display panel 21. In other words, light laterally emitted from the light sources 24 is extracted and directed to the display panel 21.

In detail, the backlight unit 23 may include two or more light source arrays for emitting light in different directions. That is, a first light source array that includes first light sources (also denoted by 24a) and second light sources 24b, and a second light source array that includes third light sources 24c and third light sources 24d are alternately arrayed at a plurality of times in a y axis direction on the drawing. The first light sources 24a and the second light sources 24b are oriented in a +x axis direction on the drawing, and the third light sources 24c and the fourth light sources 24d are oriented in a -X axis direction on the drawing.

As such, since a light emitting direction of the first light source array is opposite to that of the second light source array, the brightness of light can be prevented from being strong in a specific region of the backlight unit 23, or being weak.

In detail, a hot spot may be perceived in a light source region where the brightness of light emitted from the first light source 24a is high, and the brightness of the light may be decreased in a direction coming closer to the second light source 24b. To prevent this case, the diffusion patterns 232a may be arrayed as illustrated in the drawing. That is, the distribution density of the diffusion patterns 232a is increased in the direction of light emitted from a corresponding one of the light sources 24a and 24c, and distances between the diffusion patterns 232a is decreased in the direction of the light, thereby preventing a brightness decrease of the light behind the light source 24b or 24d adjacent to the corresponding one of the light sources 24a and 24c, and thus, the brightness of the light can be uniform.

In other words, the number of the diffusion patterns 232a decreases in a region near the light source 24 such that light emitted from the light source 24 is totally reflected by the light extraction layer 232 and is spread through a long distance. On the contrary, the number of the diffusion patterns 232a increases in a direction going away from the light source 24, to increase frequencies of the diffusion and refraction of weaken light. Accordingly, the brightness of light can be uniform in both the region near the light source 24 and the region distant from the light source 24.

Although the shapes and arrangements of the diffusion patterns 232a are described according to the current embodiment, but the present disclosure is not limited thereto.

In addition, although the light emitting direction of the first light source array is opposite to that of the second light source array, but the present disclosure is not limited thereto. That is, regardless of the arrangement of the diffusion patterns 232a, the arrangement of the light sources 24 may be varied within the scope of the present disclosure.

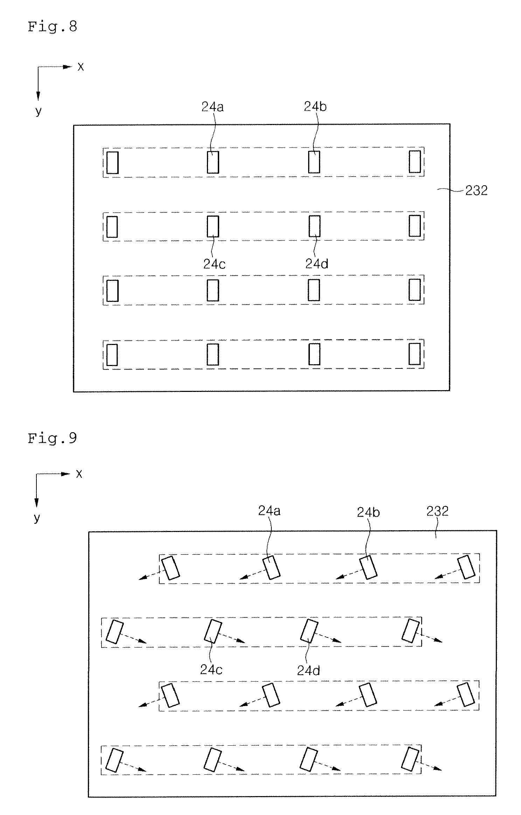

For example, referring to FIG. 8, a first light source array and a second light source array may be arranged in the y axis direction. In addition, light may be emitted in the same direction or different directions from the first and second light source arrays.

Referring to FIG. 9, light emitting surfaces of light sources constituting a first light source array and light emitting surfaces of light sources constituting a second light source array may be tilted upward or downward through predetermined angles from an x axis direction.

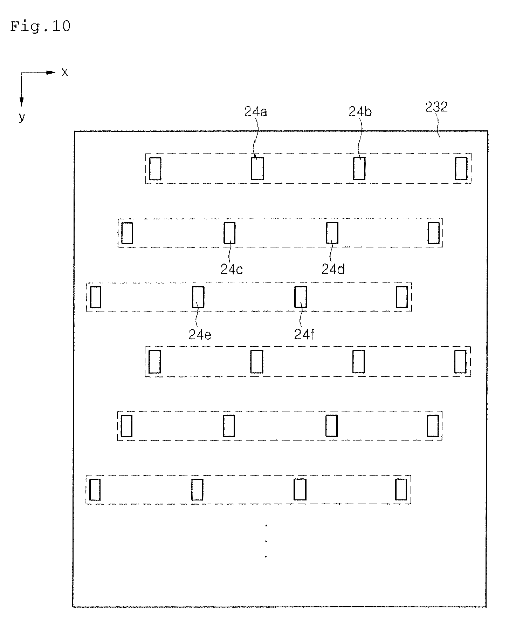

Referring to FIG. 10, distances of a plurality of light source arrays from the y axis may be different.

In detail, in the embodiment of FIG. 10, third light source arrays including light sources 24e and 24f are provided, as well as first and second light source arrays, and distances that the light sources 24a, 24c, and 24e constituting the first, second, and third light sources arrays are spaced apart from the y axis are different from one other. That is, the light source 24a constituting the first light source array may be farthest from the y-axis, and the light source 24e constituting the third light source array may be nearest to the y-axis.

Although the various arrangements of the light sources according to the embodiments are illustrated in FIGS. 7 to 10, the present disclosure is not limited thereto. Hereinafter, it is assumed that light sources are arranged as illustrated in FIG. 7.

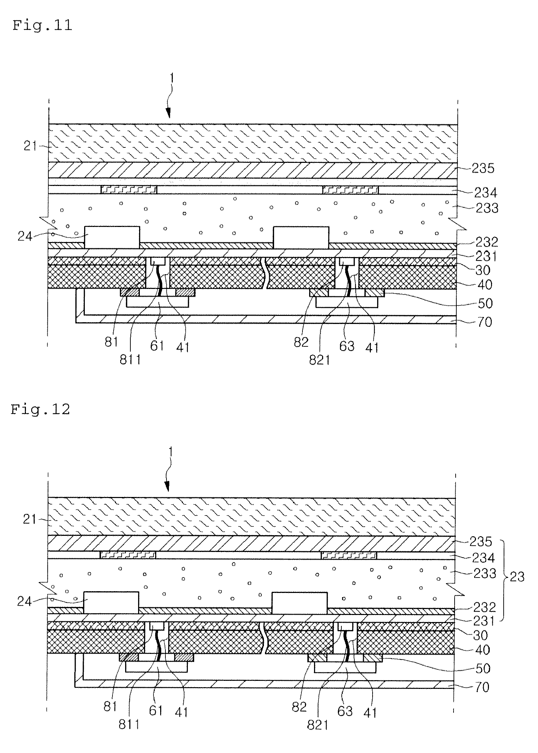

FIGS. 11 and 12 are cross-sectional views illustrating a coupling structure of a driving part of a display module according to an embodiment.

Referring to FIGS. 11 and 12, the back cover 40 is attached to the rear surface (the lower surface in the drawing) of the backlight unit 23 according to the current embodiment, and the heat dissipation member 30 may be disposed between the backlight unit 23 and the back cover 40. Alternatively, the heat dissipation member 30 may be attached to the rear surface of the back cover 40.

In detail, the driving part 60, which includes the power supply part 61, the main board 62, and the driving control part 63, is installed on the rear surface of the back cover 40. The light sources 24 emit light using power supplied from the driving part 60. The driving part 60 is stably fixed to the back cover 40 through the chassis 50.

According to the embodiment, a first connector 81 may be disposed on the rear surface of the circuit board layer 231, and the back cover 40 may be provided with a hole 41 for receiving the first connector 81. The first connector 81 electrically connects the light source 24 to the power supply part 61 to supply a driving voltage from the power supply part 61 to the light source 24.

For example, the first connector 81 is disposed on the lower surface of the circuit board layer 231, and is electrically connected to the power supply part 61 through a first cable 811 to transmit the driving voltage to the light source 24. The driving voltage is supplied from the power supply part 61 through the first cable 811.

The driving control part 63 may be a timing controller, which controls a driving timing of the display panel 21. In more detail, the timing controller generates signals for controlling driving timings of a data driving part (not shown), a gamma voltage production part (not shown), and a gate driving part (not shown), which are provided to the display panel 21, to supply the signals to the display panel 21.

To synchronize driving of the backlight unit 23, more particularly, driving of the light sources 24 with the driving of the display panel 21, the timing controller may provide the backlight unit 23 with a signal for controlling a driving timing of the light sources 24.

According to the embodiment, a second connector 82 may be disposed on the rear surface of the circuit board layer 231, and the back cover 40 may be provided with the hole 41 for receiving the second connector 82. The second connector 82 electrically connects the circuit board layer 231 to the driving control part 63 to supply a control signal from the driving control part 63 to the circuit board layer 231.

Hereinafter, a structure that the light guiding layer 233 is installed on the circuit board layer 231 according to an embodiment will now be described in detail with reference to the accompanying drawings. Like reference numerals denote like elements, and a repeated description thereof will be omitted. The previously-described structures and embodiments may be applied to the following embodiments.

Hereinafter, the light guiding layer 233 is provided in the form of a separate injection-molded part that is attached to the upper surface of the light extraction layer 232, which is applied in common to the following embodiments.

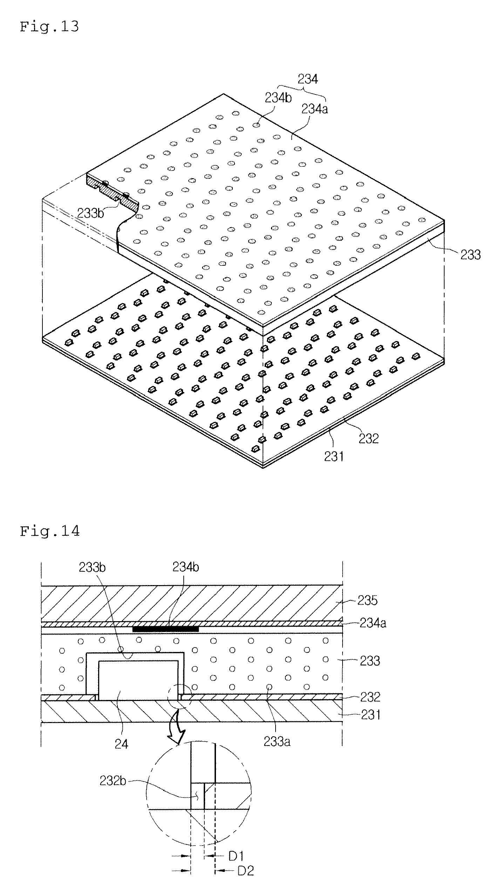

FIG. 13 is an exploded perspective view illustrating a configuration of a backlight unit according to a first embodiment, and FIG. 14 is a vertical cross-sectional view illustrating the backlight unit of FIG. 13.

Referring to FIGS. 13 and 14, the light extraction layer 232 is disposed on the upper surface of the circuit board layer 231, and the light extraction layer 232 may be provided in the form of a metal reflection sheet having high reflectivity, as described above.

In detail, the reflection sheet has holes 232b in positions corresponding to the positions of the light sources 24, so that the light sources 24 can pass through the holes 232b. Thus, when the reflection sheet is attached to the circuit board layer 231 in a state where the light sources 24 are mounted on the circuit board layer 231, each of the light sources 24 can pass through a corresponding one of the holes 232b.

The light guiding layer 233 is placed on the upper surface of the light extraction layer 232, and be formed of the above-described resin such as polymethyl metaacrylate (PMMA) by using a separate mold, e.g., through extrusion molding. After injection molding, the light guiding layer 233 may be attached to the upper surface of the light extraction layer 232 by adhesive. A mold is designed such that grooves 233b for receiving the light sources 24 are formed in the lower surface of the light guiding layer 233 through injection molding.

After the light guiding layer 233 is attached to the light extraction layer 232, the screening layer 234 is formed on the upper surface of the light guiding layer 233. As described above, the screening layer 234 may be formed by directly depositing the screening patterns 234b on the upper surface of the light guiding layer 233 (as illustrated in FIG. 12), or by attaching the transparent film 234a provided with the screening patterns 234b on the upper surface of the light guiding layer 233. In this case, the screening patterns 234b may be formed through depositing, coating, or printing on the upper surface of the transparent film 234a.

Alternatively, as described above, the screening layer 234 may be attached or deposited on the lower surface of the diffusion layer 235 (refer to FIG. 11).

When the light extraction layer 232 is attached in a reflection film form on the circuit board layer 231, the holes 232b formed in the light extraction layer 232 may have the same size as that of a horizontal cross-section of the light sources 24 such that the holes 232b are not spaced apart from the light emitting surfaces of the light sources 24. However, a predetermined clearance D1 may be formed between the hole 232b and the light source 24 to prevent interference of the light source 24 and tearing of the reflection sheet while the light source 24 passes through the hole 232b. For the same reason, a predetermined clearance D2 may be formed between the groove 233b and the light source 24.

The clearance D1 between the hole 232b and the light source 24 may be smaller than the clearance D2 between the groove 233b and the light source 24.

This is because light laterally emitted from the light source 24 has a predetermined orientation angle. That is, the light is spread in a fan shape to both the light extraction layer 232 and the upper surface of the light guiding layer 233. At this point, a portion of the light emitted to the light extraction layer 232 may be provided to the circuit board layer 231 through a gap defined by the clearance D1.

At this point, light obliquely emitted at the orientation angle from the light source 24 to the light extraction layer 232 is totally reflected at the same angle as an incident angle. However, since the upper surface of the circuit board layer 231 is white, the light may be dispersed from the circuit board layer 231 unlike the light extraction layer 232. In other words, a portion of the dispersed light may be vertically reflected from the circuit board layer 231, thereby promoting a hot spot around the light source 24. Thus, the clearance D1 between the hole 232b and the light source 24 may be smaller than the clearance D2 between the groove 233b and the light source 24. Alternatively, the upper surface of the circuit board layer 231 may be colored in black to absorb light, and thus preventing the dispersion of the light.

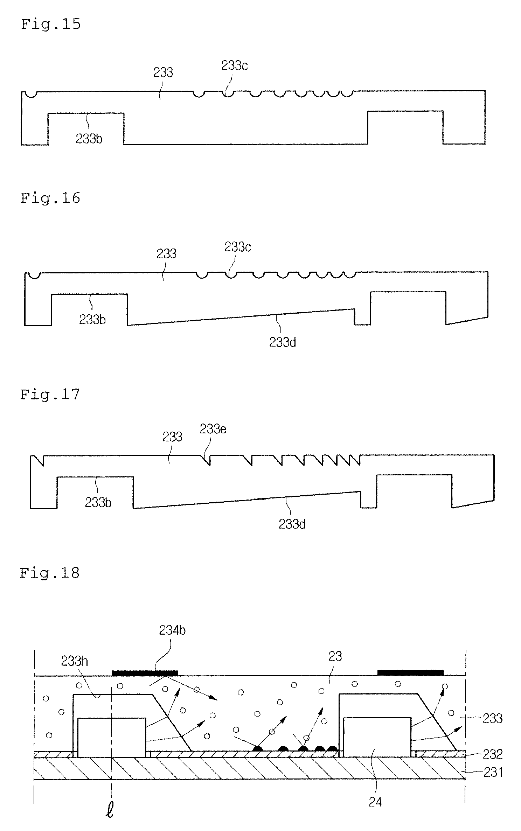

FIG. 15 is a cross-sectional view illustrating a light guiding layer according to a second embodiment.

Referring to FIG. 15, diffusion recesses 233c may be disposed in the upper surface of the light guiding layer 233. The diffusion recess 233c may be round with a predetermined curvature.

In detail, a distance between the diffusion recesses 233c may decrease in a travelling direction of light emitted from the light source 24, that is, in a direction going away from the light source 24. This is because of the same reason that the distribution density of the diffusion patterns 232a disposed on the upper surface of the light extraction layer 232 increases in the direction going away from the light source 24. That is, since the amount of light decreases in the direction going away from the light source 24, the distance between the diffusion recesses 233c decreases in the direction going away from the light source 24 to make the brightness of the display module 20 uniform.

The diffusion recesses 233c may be formed in the lower surface of the light guiding layer 233 as well as the upper surface thereof. In this case, the diffusion recesses 233c may be disposed not to interfere with the diffusion patterns 232a disposed on the upper surface of the light extraction layer 232, so as to increase diffusion frequency of light, thereby improving the brightness uniformity of the light.

FIG. 16 is a cross-sectional view illustrating a light guiding layer according to a third embodiment.

Referring to FIG. 16, the light guiding layer 233 may be injection-molded such that a lower surface of the light guiding layer 233 is inclined at a predetermined angle.

In detail, an inclination surface 233d is inclined upward in the travelling direction of light laterally emitted from the light source 24, that is, in the direction going away from the light source 24. As a result, light emitted from the light source 24 collides with the inclination surface 233d, and then, is reflected to the display panel 21. Furthermore, since a reflection angle is varied according to a position where the light emitted from the light source 24 collides with the inclination surface 233d and is reflected to the display panel 21, a hot spot is maximally suppressed, and the uniformity of brightness is improved.

In addition, light diffused within the light guiding layer 233 or reflected by the screening pattern 234b is refracted through the inclination surface 233d of the light guiding layer 233. Also, light reflected from the light extraction layer 232 is refracted at various angles through the inclination surface 233d. Thus, since light is diffused at various angles within the light guiding layer 233, the brightness of the light can be uniform.

FIG. 17 is a cross-sectional view illustrating a light guiding layer according to a fourth embodiment.

Referring to FIG. 17, diffusion recesses 233e having a polygonal cross-section such as a triangle cross-section may be formed in the upper surface of the light guiding layer 233. The diffusion recesses 233e are different in cross-section from the diffusion recesses 233c as illustrated in FIG. 13, and are the same in forming method as the diffusion recesses 233c.

The lower surface of the light guiding layer 233 may have the inclination surface 233d.

FIG. 18 is a cross-sectional view illustrating a light guiding layer according to a fifth embodiment.

Referring to FIG. 18, grooves 233h for receiving the light sources 24 may be recessed in the light guiding layer 233, and may have a vertical cross-section that is different from a cross-section of the light source 24.

In detail, an inner surface of the groove 233h corresponding to a side surface of the light source 24 provided with an LED device for emitting light is inclined at a predetermined angle as illustrated in FIG. 18. In this case, light spread at a predetermined orientation angle from the light source 24 can be refracted at various angles through the inclined surface of the groove 233h. Thus, a hot spot can be prevented from being formed in a region near the light source 24. The light, refracted at various angles through the inclined surface of the groove 233h, collides with the screening patterns 234b and the dispersion particles 233a within the light guiding layer 233 as well as the diffusion patterns 232a formed on the light extraction layer 232, and thus, is reflected again at various angles. Thus, the brightness of light can be uniform on the entire surface of the backlight unit 23.

The groove 233h has the cross section as illustrated in FIG. 18, but the present disclosure is not limited thereto. That is, the cross-section of the groove 233h may be asymmetrical with respect to a line '1' vertically bisecting the light source 24 as illustrated in FIG. 18, or the inner surface of the groove 233h corresponding to the rear surface of the light source 24, that is, to the opposite surface to the light emitting surface may be inclined in the same or different form from the inclined surface of the groove 233h.

The groove 233h may be round with a predetermined curvature to completely surround the light source 24.

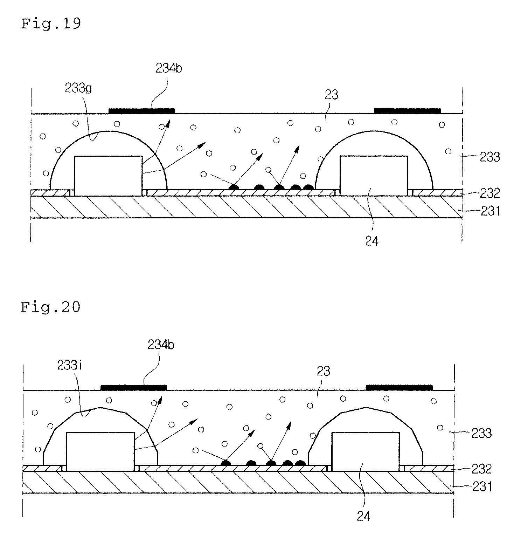

FIG. 19 is a cross-sectional view illustrating a light guiding layer according to a sixth embodiment.

Referring to FIG. 19, grooves 233g for receiving the light sources 24 may be recessed in the light guiding layer 233, and may have a round cross-section with a predetermined curvature. That is, the groove 233g may be round with a predetermined curvature to form a hollow semi sphere shape that receives the light source 24. However, the shape of the groove 233g is not limited to the semi sphere shape, and thus, the groove 233g may have any round surface with a curvature.

Since the other configuration thereof is the same as that of the previous embodiment, a description thereof will be omitted.

FIG. 20 is a cross-sectional view illustrating a light guiding layer according to a seventh embodiment.

Referring to FIG. 20, grooves 233i disposed in the light guiding layer 233 may have a polygonal cross section defined by a plurality of planes that are continuously connected to one another.

In detail, the groove 233i has an approximately hollow bowl shape as illustrated in FIG. 19, but a surface constituting the bowl shape is not smooth. In other words, a plurality of small planes are continuously connected to form a groove. When the groove 233i has a polygonal surface, light emitted from the light source 24 can be refracted at various angles, thereby making the brightness of light emitted from a backlight unit uniform and minimizing the occurrence of a hot spot.

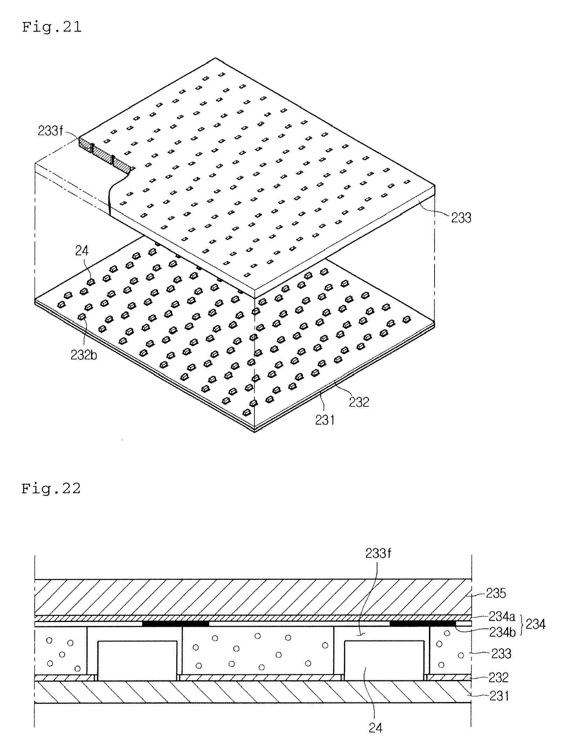

FIG. 21 is an exploded perspective view illustrating a backlight unit including a light guiding layer according to an eighth embodiment. FIG. 22 is a vertical cross-sectional view illustrating the backlight unit of FIG. 21.

Referring to FIGS. 21 and 22, the light guiding layer 233 includes hollow portions 233f in positions for receiving the light sources 24. That is, the hollow portions 233f passing through the light guiding layer 233 may be formed, instead of grooves for receiving the light sources 24.

In detail, when the light guiding layer 233 includes the hollow portions 233f, the screening layer 234 may be disposed on the lower portion of the diffusion layer 235. That is, the screening patterns 234b may be deposited on the bottom surface of the diffusion layer 235, or a transparent film including the screening patterns 234b may be attached to the bottom surface of the diffusion layer 235.

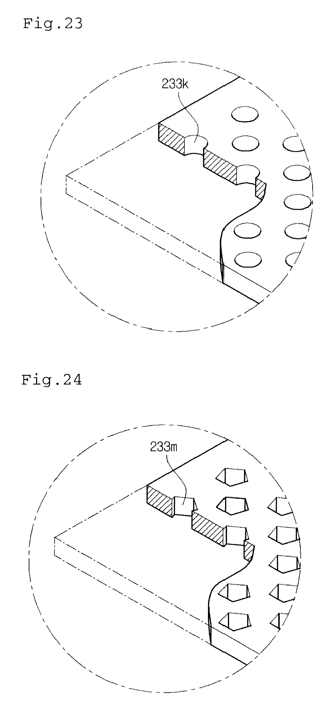

FIG. 23 is a partial cut-away perspective view illustrating a light guiding layer according to a ninth embodiment.

Referring to FIG. 23, hollow portions 233k having a cylindrical shape are disposed in the light guiding layer 233. That is, the hollow portions 233k have different shapes from the plane shapes of the light sources 24. Since the hollow portion 233k has a cylindrical shape, light horizontally emitted from the light source 24 is refracted and diffused in various directions to make the brightness of the light uniform and minimize the occurrence of a hot spot.

FIG. 24 is a partial cut-away perspective view illustrating a light guiding layer according to a tenth embodiment.

Referring to FIG. 24, the light guiding layer 233 includes hollow portions 233m with a polygonal horizontal cross-section. That is, the hollow portions 233m have different polygonal shapes from the plane shapes of the light sources 24. As the number of angles of the cross-section of the hollow portion 233m increases, the number of refraction and diffusion directions of light emitted from the light source 24 increases, and thus, making the brightness of the light uniform and minimizing the occurrence of a hot spot. The hollow portions 233m have a pentagon cross-section in FIG. 24, but the present disclosure is not limited thereto, and thus, the hollow portions 233m may have another polygonal cross-section such as a hexagon cross-section.

According to an embodiment, a third material, that is, a material different from both a resin constituting the light guiding layer and a material constituting the light source 24 may fill the hollow portions.

In detail, the third material may be transparent and have a better surface attachment characteristic than that of acrylic resin constituting the light guiding layer, such as silicone. The third material may fills only the space between the hollow portion and the light emitting surface of the light source 24, or may fill the entire hollow portion.

The third material fills the hollow portion to attach the light guiding layer 233 to the first layer. Thus, adhesive may be unnecessary on the lower surface of the light guiding layer 233.

Furthermore, the following effects are also obtained by filling the hollow portions with the third material.

First, the third material functions as an adhesive, as described above.

Secondly, an uneven surface attachment characteristic, which may occur when typical acrylic resin is used, can be prevented to improve an optical performance.

Thirdly, bending of the light guiding layer and the diffusion layer due to a difference in thermal deformation constant between materials constituting the light guiding layer and the diffusion layer can be prevented.

Moreover, the following effects can be obtained using the display apparatus according to the above embodiments.

First, since the light guiding layer formed of resin through separate injection molding is installed on the circuit board layer, the light guiding layer has a uniform thickness. In detail, a case that the upper surface of a circuit board layer is rough when resin is applied on the circuit board layer and cured can be reduced. Thus, since a contact area between the upper surface of the light guiding layer and the lower surface of the screening layer increases, the light guiding layer is securely attached to the lower surface of the screening layer, and the optical performance thereof is improved.

Secondly, since the distance between the light emitting surface of the light sources and the receiving part for receiving the light sources is constant, light emitted from the light sources has uniform color and brightness, thereby improving the optical performance thereof.

Thirdly, the bending moment of the various layers between the circuit board layer and the diffusion layer due to a difference in thermal expansion coefficient thereof can be suppressed at high temperature. That is, a deformation of the backlight unit occurring when temperature is increased can be reduced.

Although embodiments have been described with reference to a number of illustrative embodiments thereof, it should be understood that numerous other modifications and embodiments can be devised by those skilled in the art that will fall within the spirit and scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. A display apparatus comprising:
a display panel; and
a backlight unit disposed behind the display panel to provide light,
wherein the backlight unit includes:
a first layer;
a light source on the first layer; and
a second layer including a receiving part surrounding the light source, the second layer being disposed on an upper side of the first layer to transmit and diffuse light emitted from the source,
wherein a space is disposed between the receiving part and the light source.

2. The display apparatus according to claim 1, wherein the second layer is placed in a form of a separate injection-molded part on the first layer.

3. The display apparatus according to claim 2, wherein the first layer comprises:
a circuit board layer including a printed circuit board (PCB) on which the light source is mounted; and
a light extraction layer disposed on an upper surface of the circuit board layer and reflecting light emitted from the light source, the light extraction layer including a hole through which the light source passes,
wherein a distance D1 between an edge of the hole and the light source is equal to or smaller than a distance D2 between an edge of the receiving part and the light source.

4. The display apparatus according to claim 3, wherein the receiving part comprises a groove surrounding a side part and an upper part of the light source.

5. The display apparatus according to claim 3, wherein the receiving part comprises a hollow portion passing through the second layer.

6. The display apparatus according to any one of claims 1 to 4, wherein a plurality of diffusion recesses are disposed in one of an upper surface and a lower surface of the second layer.

7. The display apparatus according to claim 6, wherein the diffusion recesses has a round or polygonal cross-section

8. The display apparatus according to claim 6, wherein a distance between adjacent ones of the diffusion recesses decreases in a traveling direction of light emitted from the light source.

9. The display apparatus according to claim 6, wherein a region where the diffusion recesses are disposed is widen in a traveling direction of light emitted from the light source.

10. The display apparatus according to claim 2, wherein an inclination surface is disposed in a portion of a lower surface of the second layer.

11. The display apparatus according to claim 10, wherein the inclination surface is inclined in a direction coming closer to an upper surface of the second layer in a traveling direction of light emitted from the light source.

12. The display apparatus according to claim 1, wherein the receiving part has a height or width that is greater than a height or width of the light source.

13. The display apparatus according to claim 2, wherein the light source comprises a plurality of light source arrays horizontally (along an x axis) emit light,
a plurality of light sources constituting each of the light source arrays emit light in an identical direction, and
light emitting directions of adjacent ones of the light source arrays are opposite to each other.

14. The display apparatus according to claim 13, wherein the adjacent ones of the light source arrays are arranged in a zigzag shape in a vertical direction (along a y axis).

15. The display apparatus according to claim 13, wherein the adjacent ones of the light source arrays are arranged on an identical line in a vertical direction (along a y axis).

16. The display apparatus according to claim 13, wherein the light sources constituting each of the light source arrays are tilted from a horizontal direction (an x-axis direction).

17. The display apparatus according to claim 3, wherein a plurality of diffusion patterns are disposed on an upper surface of the light extraction layer, and
a distribution density of the diffusion patterns increases in a direction going away from the light source.

18. The display apparatus according to claim 17, wherein the diffusion patterns has a fan shape that increases in width in the direction going away from the light source.
